(19) Europäisches Patentamt
European Patent Office
Office européen des brevets

(11) Veröffentlichungsnummer: **0 155 626**
**B1**

# (12) EUROPÄISCHE PATENTSCHRIFT

(45) Veröffentlichungstag der Patentschrift: **03.05.89**

(51) Int. Cl.⁴: **C 07 F 7/12**

(21) Anmeldenummer: **85102797.9**

(22) Anmeldetag: **12.03.85**

(54) **Verfahren zur Herstellung von Dimethyldichlorsilan.**

(30) Priorität: **23.03.84 DE 3410644**

(43) Veröffentlichungstag der Anmeldung: **25.09.85 Patentblatt 85/39**

(45) Bekanntmachung des Hinweises auf die Patenterteilung: **03.05.89 Patentblatt 89/18**

(84) Benannte Vertragsstaaten: **BE DE FR GB IT**

(56) Entgegenhaltungen:
**DE-A- 2 950 402**
**FR-A- 1 089 575**
**FR-A- 2 119 477**
**US-A- 4 393 229**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Feldner, Kurt, Dr., Roggendorfstrasse 59, D-5000 Köln 80 (DE)**
Erfinder: **Grape, Wolfgang, Dr., Roggendorfstrasse 61, D-5000 Köln 80 (DE)**

**EP 0 155 626 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Dimethyldichlorsilan aus Zwangsanfallprodukten der Methylchlorsilandirektsynthese, bei dem sowohl methylreiche niedrigsiedende Anteile als auch nichtspaltbare hochsiedende Reste mit Methyltrichlorsilan insbesondere zu wertvollem Dimethyldichlorsilan umgesetzt werden.

Bei der Herstellung von Dimethyldichlorsilan durch Direktsynthese (Müller-Rochow-Verfahren) entsteht neben dem gewünschten Produkt ein erheblicher Anteil an Zwangsanfallprodukten. Das Direktverfahren ist in der Patentliteratur beschrieben, z.B. in den US-PS 2 380 995 und 2 488 487.

Als mengenmässig bedeutendstes Nebenprodukt entsteht - in Mengen, die für eine wirtschaftliche Ausnutzung bei der Herstellung von Siliconen nicht verwertet werden können - das Methyltrichlorsilan. Methyltrichlorsilan wird zur Zeit zum grössten Teil für die Herstellung von pyrogener Kieselsäure verwendet; dieses Verfahren stellt aber eine unbefriedigende Notlösung dar, da wertvolle - ins System eingebrachte Methylgruppen - zu $CO_2$ und Wasser verbrannt werden.

Neben Methyltrichlorsilan entstehen bei der Direktsynthese von Dimethyldichlorsilan noch weitere Nebenprodukte:

a) leicht siedende Zwangsanfallprodukte mit einem Siedepunkt unterhalb von 40°C, wie z.B. Tetramethylsilan (TMS), Dimethylmonochlorsilan und 2-Methylbuten (2).

b) Verbindungen, die einen höheren Siedepunkt besitzen als die Monosilane, d.h. einen solchen von mehr als 70°C bis zu etwa 180°C; diese Verbindungen werden im folgenden entweder als Rest oder als hochsiedende Fraktion bezeichnet. Dieser Rest ist eine komplexe Mischung von Verbindungen, die SiSi-, SiOSi- und $SiCH_2Si$-Bindungen in den Molekülen einschliessen. Typische Reste sind in den US-PSen 2 599 435 und 2 681 355 beschrieben.

Vorschläge zur Aufarbeitung dieser Zwangsanfallprodukte sind in grosser Zahl gemacht worden (vgl. z.B. Deutsche Offenlegungsschrift 2 950 402; R. Calas et al., Journal of Organometallic Chemistry, 225, 117 (1982)).

Unter Umständen entstehen auch die Verbindungen Trimethylmonochlorsilan und Methyldichlorsilan, die normalerweise zu den Nutzprodukten bei dem Direktverfahren gehören, jedoch in Mengen, die einer wirtschaftlichen Ausnutzung entgegenstehen.

Nach der US-PS 2 786 861 wurden Alkylchlorsilane in Gegenwart eines Katalysators, wie Aluminiumchlorid umgewandelt, und es wurde festgestellt, dass diese Umwandlung bei geringeren Temperaturen in einer vorteilhaften Weise ausgeführt werden konnte, wenn man eine diese Umwandlung fördernde Verbindung, nämlich ein Hydrogensilan benutzte. Ein gravierender Nachteil dieser Methode besteht darin, dass extrem hohe Mengen an Aluminiumchlorid als Katalysator benötigt werden, und zwar mindestens 10%, bezogen auf die umzusetzende Silanmischung.

Die Übertragung von Methylgruppen von Tetramethylsilan auf Hexachlordisilan oder 1,1,2,2-Tetrachlor-1,2-dimethyldisilan oder Gemischen von chlorreichen Disilanen wird beispielsweise in der Deutschen Offenlegungsschrift 3 208 829 beschrieben. Als Katalysator dient hier ein Organoaluminiumchlorid, das aber durch gleichzeitig dem Reaktionsgemisch zugefügtes Chlorwasserstoffgas in den bekannten Katalysator $AlCl_3$ umgewandelt wird.

Die Umsetzung von methylreichen, Spaltungsreaktionen nicht zugänglichen Disilanen mit Methyltrichlorsilan mit dem Ziel Dimethyldichlorsilan sowie chlorreiche, Spaltungsreaktionen zugängliche Disilane zu schaffen, wird in der Deutschen Offenlegungsschrift 3 314 734 (= US-A 4 393 229) beschrieben. Da es ein erklärtes Ziel dieses Verfahrens ist, Spaltungsreaktionen nicht zugängliche Disilane in spaltbare Disilane umzuwandeln, beschränkt man sich auf Temperaturen unterhalb von 250°C und Drücken bis zu 3 Atmosphären, um Nebenreaktionen auszuschliessen. Mögliche Nebenreaktionen sind dem Fachmann prinzipiell geläufig. Radikalische Reaktionen von Polysilanen werden beispielsweise in der Deutschen Auslegeschrift 2 618 246 beschrieben, die mögliche Beteiligung von Lewissäuren, wie z.B. Aluminiumchlorid, an solchen radikalischen Reaktionen beschreibt beispielsweise die Deutsche Offenlegungsschrift 3 136 786. Die genannten Nebenreaktionen laufen bei den in der DOS 3 314 734 als günstig beschriebenen Reaktionsbedingungen nicht ab. Allerdings hat die Wahl der Reaktionsbedingungen von z.B. 150°C/3 Atmosphären (Beispiel 4) zur Folge, dass erhebliche Mengen an Aluminiumchlorid als Katalysator benötigt werden. In einigen der veröffentlichten Beispiele beträgt die Katalysatormenge etwa 20%, bezogen auf die eingesetzte Silanmischung, ohne Mitrechnung des als Promoter zugefügten Hydrogensilans.

Da eine Aufarbeitung des Katalysators nur unter erheblichem Aufwand möglich ist, ist dies unwirtschaftlich. Hinzu kommt, dass eine kontinuierliche Fahrweise unter homogener Katalyse bei derart hohem Katalysatoranteil aufgrund der geringen Löslichkeit des Aluminiumchlorids im Reaktionsgemisch kaum möglich ist. Als Verfahren zur Herstellung von Dimethyldichlorsilan in einem kontinuierlich betriebenen Reaktor ist das in der DOS 3 314 734 beschriebene Verfahren daher kaum geeignet.

Aufgabe der vorliegenden Erfindung war es daher, ein Verfahren zur Verringerung der Mengen an - bisher im wesentlichen der Vernichtung zugeführten - Abfallprodukten der Methylchlorsilandirektsynthese bereitzustellen.

Aufgabe der vorliegenden Erfindung war es ferner, ein Verfahren zur Herstellung von Dimethyldichlorsilan aus Zwangsanfallprodukten der Methylchlorsilandirektsynthese zu finden.

Weiterhin lag der vorliegenden Erfindung die Aufgabe zugrunde, die Methylgruppen, die bisher – gebunden in den leichtsiedenden Resten wie Tetramethylsilan (TMS) und Dimethylchlorsilan sowie in dem hochsiedenden nichtspaltbaren Rest – vernichtet werden, einer sinnvollen Ausnutzung zuzuführen.

Eine weitere Aufgabe der vorliegenden Erfindung ist, die Verbindung Methyldichlorsilan, falls erforderlich, in wertvolle Verbindungen umzuwandeln.

Schliesslich sollte das Verfahren zur Herstellung von Dimethyldichlorsilan aus Zwangsanfallprodukten der Methylchlorsilandirektsynthese so gestaltet werden, dass es in einer kontinuierlich betriebenen Verfahrensweise durchgeführt werden kann.

Gegenstand der vorliegenden Erfindung ist somit ein Verfahren zur Herstellung von Dimethyldichlorsilan aus den niedrig wie hochsiedenden Zwangsanfallprodukten der Methylchlorsilan-Direktsynthese, dadurch gekennzeichnet, dass man Methyltrichlorsilan bei Temperaturen zwischen 300 °C und 400 °C sowie bei Drucken bis zu 100 bar gleichzeitig mit den Methylgruppen – reichen, niedrig siedenden Anteilen und den hochsiedenden, nicht-spaltbaren Anteilen, in Gegenwart eines Katalysators umsetzt.

Durch das erfindungsgemässe Verfahren werden «Abfallprodukte», wie sie bei der Rochow-Synthese anfallen, durch Umsetzung miteinander in Gegenwart eines Katalysators in hoher Ausbeute in das wertvolle Dimethyldichlorsilan umgewandelt.

Als methylreiches niedrigsiedendes Zwangsanfallprodukt kann beim erfindungsgemässen Verfahren jede aus dem Rochow-Müller-Verfahren erhaltene Fraktion mit einem Siedepunkt von unter 40 °C eingesetzt werden. Diese Fraktionen enthalten in der Regel als Hauptbestandteile Tetramethylsilan, Dimethylmonochlorsilan, 2-Methylbuten (1) und 2-Methylbuten (2). Ferner treten $CH_3Cl$, Ethylchlorid, 2-Methylbuten, $SiHCl_3$, $SiCl_4$ und weitere Verbindungen als Nebenprodukte auf. Die Zusammensetzung kann stark variieren und ist von der Fahrweise der Methylchlorsilandirektsynthese abhängig. Die beiden Verbindungen TMS und Dimethylmonochlorsilan sind als methylreich anzusehen und sind in der Lage, Methylgruppen auf Methyltrichlorsilan, gegebenenfalls auch auf $SiCl_4$ zu übertragen. Bei Einhaltung der erfindungsgemässen Bedingungen gibt TMS zwei Methylgruppen ab und geht dabei in das wertvolle Dimethyldichlorsilan über etwa gemäss folgendem Formelschema:

$$(CH_3)_4Si + 2\,CH_3SiCl_3 \longrightarrow 3\,(CH_3)_2SiCl_2$$

Ebenso kann Dimethylmonochlorsilan Methylgruppen auf Methyltrichlorsilan übertragen.

In der US-PS 2 786 861 sowie in der DOS 3 314 734 wurde beschrieben, dass bei Verfahren, die einen $CH_3$-Cl-Austausch an Silanen beinhalten, der Zusatz eines Hydrogensilans zusätzlich zu dem eigentlichen Katalysator förderlich für die Umsetzung ist. Beim erfindungsgemässen Verfahren ist ein besonderer Zusatz nicht erforderlich, da Hydrogensilane in der eingesetzten methylreichen niedrigsiedenden Fraktion in ausreichenden Mengen bereits vorhanden sind. Eine solche, die Umsetzung fördernde Hydrogensilanverbindung, ist beispielsweise das in der niedrigsiedenden Fraktion enthaltene Dimethylmonochlorsilan. Aber auch die oben als Bestandteil der niedrigsiedenden Fraktion erwähnte Verbindung $SiHCl_3$ wirkt in der gewünschten Richtung. Gemäss der vorliegenden Erfindung kann aber auch zusätzlich zu der niedrigsiedenden methylreichen Fraktion die Verbindung Methyldichlorsilan dem Reaktionsgemisch zugefügt werden. Methyldichlorsilan ist ebenfalls als eine die gewünschte Umsetzung fördernde Verbindung anzusehen.

Die in der niedrigsiedenden Fraktion weiterhin vorhandenen Kohlenwasserstoffverbindungen stören die erfindungsgemässe Umsetzung nicht und können nach der Aufarbeitung des nach dem erfindungsgemässen Verfahren erhaltenen Rohprodukts einer anderweitigen Verwertung (z.B. Verbrennung) zugeführt werden.

Die methylreiche nichtspaltbare Disilanfraktion wird erhalten, nachdem der bei der Methylchlorsilandirektsynthese erhaltene hochsiedende Rest durch bekannte Spaltungsreaktionen in Monosilane und eine nichtspaltbare Fraktion aufgeteilt worden ist.

Bei den Direktverfahren wird Methylchlorid mit Silicium oder einer Legierung oder Mischung aus Silicium und einem Metall bei erhöhter Temperatur umgesetzt, um Dimethyldichlorsilan herzustellen. Nachdem man die bis etwa 70 °C siedenden monomeren Methylsilane und Methylchlorsilane von dem Reaktionsprodukt entfernt hat, bleibt ein Rest, eine hochsiedende Fraktion, zurück. Es wurde festgestellt, dass in diesem Rest wertvolle Fraktionen verblieben sind, und es sind verschiedene Verfahren benutzt worden, um das in diesem Rest enthaltene Silan zu nutzen.

In den US-PSen 2 709 176 und 2 842 580 sind Verfahren zum Spalten der in dem Rest enthaltenen Polysilane beschrieben. Während die halogenreichen Polysilane leicht gespalten werden können, gelingt es nur unter bestimmten Bedingungen, die alkylreichen Polysilane zu spalten.

So sind z.B. Hexamethyldisilan, Chlorpentamethyldisilan und 1,2-Dichlortetramethyldisilan alkylreiche Disilane der genannten Art.

1,2,2-Trichlortrimethyldisilan, 1,1,2,2-Tetrachlordimethyldisilan und 1,1-Dichlortetramethyldisilan sind demgegenüber Disilane, die leichter als die genannten alkylreichen Disilane mit den üblichen Verfahren gespalten werden können. In den beim Direktverfahren zum Herstellen von Alkylhalogensilanen anfallenden Rest können alle vorgenannten Disilane angetroffen werden.

Durch die Durchführung einer der üblichen, in den oben angegebenen US-PSen beschriebenen Spaltungsreaktionen, werden 1,2,2-Trimethyltrichlordisilan, 1,1,2,2-Tetrachlordimethyldisilan und 1,1-Dichlortetramethyldisilan in monomere Silane umgewandelt und damit dem hochsiedenden Rest entzogen. Als nichtspaltbare Fraktion bleiben die alkylreichen Disilane wie Hexamethyldisilan, Chlorpentamethyldisilan oder 1,2-Dichlortetramethylsilan zurück, zusammen mit anderen Verbindungen wie Methylethyldichlorsilan, Methylpropyldichlorsilan, Disiloxanen, Trisilanen und Silalkylenen wie z. B. $(CH_3)_2ClSiCH_2SiCH_3Cl_2$. Die in dieser hochsiedenden methylreichen nichtspaltbaren Fraktion vorhandenen Methylgruppen werden nach dem erfindungsgemässen Verfahren herangezogen, um Methyltrichlorsilan in Dimethyldichlorsilan umzuwandeln.

Enthält die nichtspaltbare Fraktion beispielsweise Hexamethyldisilan, dann setzt sich dieses unter den erfindungsgemässen Bedingungen mit Methyltrichlorsilan um und bildet 1,1,2,2-Tetrachlordimethyldisilan und Dimethyldichlorsilan.

Typische Umsetzungen mit den oben beschriebenen Resten, die erfindungsgemäss durchgeführt werden, können etwa nach folgendem Formelschema wiedergegeben werden.

(I)

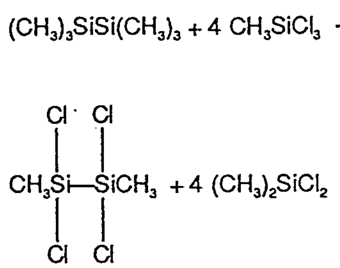

(II)

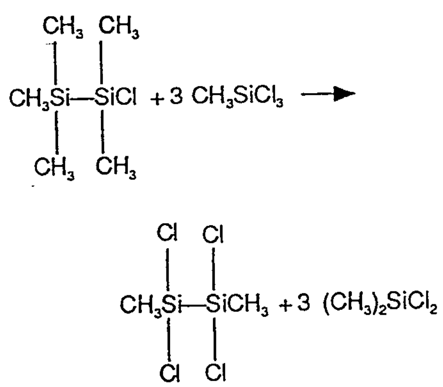

(III)

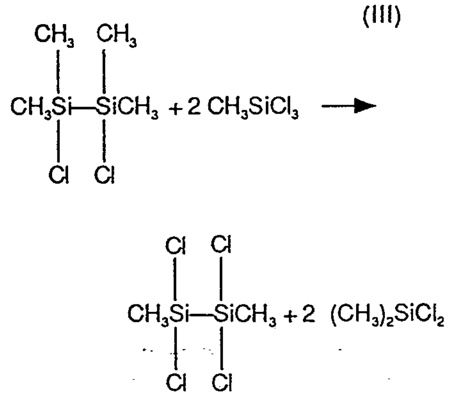

Reste von Trichlortrimethyldisilan und Tetrachlordimethyldisilan, die bei unvollständig durchgeführter Spaltung noch in der nichtspaltbaren Fraktion vorhanden sein können, stören die erfindungsgemässe Umsetzung nicht. Führt man hingegen das Verfahren unter erfindungsgemässen Bedingungen durch, so kann sogar Trichlortrimethyldisilan eine Methylgruppe auf Methyltrichlorsilan übertragen und geht dabei in Tetrachlordimethyldisilan über.

(IV)

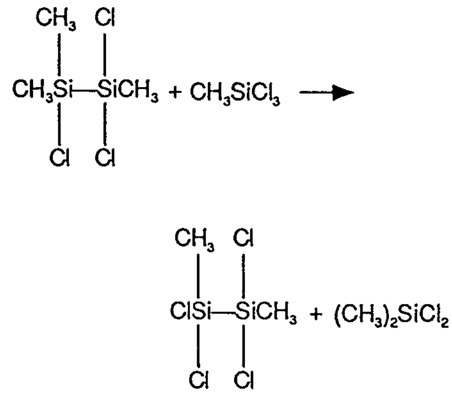

Bei Durchführung des Verfahrens unter den erfindungsgemässen Bedingungen wird als Endprodukt neben dem gewünschten Dimethyldichlorsilan ein chlorreiches Disilan erhalten. Dieses chlorreiche Disilan kann verunreinigt sein durch den Katalysator Aluminiumchlorid sowie durch aufgrund von Nebenreaktionen radikalischer Natur entstandenen anderen hochsiedenden Verbindungen und wird im allgemeinen nicht weiter isoliert, sondern lässt sich im Verbund mit den genannten Verunreinigungen relativ einfach beseitigen.

Die Mengen der einzelnen eingesetzten Zwangsanfallprodukte der Methylchlorsilandirektsynthese sind nicht kritisch. Im allgemeinen wird man die Mengen der methylreichen niedrigsiedenden Fraktion und des methylreichen nichtspaltbaren Restes den Produktionsgegebenheiten anpassen. Da sowohl die Menge der niedrigsiedenden Fraktionen als auch die Menge des nichtspaltbaren Restes von der Fahrweise der Methylchlorsilandirektsynthese abhängig sind, können die jeweils eingesetzten Mengen beider Fraktionen in gewissem Umfang variieren. Es kann auch jede Fraktion für sich allein eingesetzt werden. Im allgemeinen wird man sämtliche zur Verfügung stehenden, bisher nicht genutzten Zwangsanfallproduktfraktionen mit Methyltrichlorsilan zur Umsetzung bringen.

Die Menge des eingesetzten Methyltrichlorsilan kann abhängig sein von den Mengen und den jeweiligen Zusammensetzungen der eingesetzten Zwangsanfallproduktfraktionen.

Der Fachmann wird nach den oben beschriebenen formelmässigen Gleichungen das jeweilige Methylgruppenangebot, das in den Zwangsanfallproduktfraktionen zur Umsetzung mit Methyltrichlorsilan zur Verfügung steht, berechnen können und kann dann die stöchiometrische Menge Methyltrichlorsilan, die durch die jeweils vorhandene Methylgruppenmenge zu Dimethyldichlorsilan umgewandelt werden kann, einsetzen.

Im allgemeinen wird es jedoch bevorzugt, einen molaren Überschuss des Methyltrichlorsilans einzusetzen. In der am meisten bevorzugten Ausführungsform umfasst die Menge des Methyl-trichlorsilans etwa 1,5 bis etwa 4 Mole pro Mol zur Verfügung stehende Methylgruppe.

Methyltrichlorsilan kann im Bedarfsfalle auch ganz oder zumindest teilweise durch $SiCl_4$ ersetzt werden.

Jeder geeignete Katalysator, der den Austausch der Alkylgruppen des einen Silanmoleküls mit Halogenatomen eines anderen Silanmoleküls fördert, kann bei dem erfindungsgemässen Verfahren verwendet werden. Die bevorzugten Katalysatoren für das erfindungsgemässe Verfahren sind Aluminiumtrichlorid oder Verbindungen von Aluminiumtrichlorid, die unter den Reaktionsbedingungen zu Aluminiumtrichlorid zersetzbar sind. Es kann auch jeder äquivalente Katalysator eingesetzt werden, der den Austausch der Alkylgruppen mit den Halogenatomen in den Silanen, Disilanen und Polysilanen fördert.

Beispiele anderer Katalysatoren, die bei der Umwandlung der alkylreichen Disilane, die in den bei der Herstellung von Alkylhalogensilanen anfallenden Resten enthalten sind und die mit den Alkyltrihalogensilanen umgesetzt werden, sind Natriumaluminiumtetrachlorid, Kupfer(I)-chlorid, Borsäure und Bortrifluorid.

Aluminiumtrichlorid ist jedoch im allgemeinen der bevorzugte und wirtschaftlichste Katalysator, der wirksamer als die anderen Katalysatoren ist zur Herstellung von Dimethyldichlorsilan nach dem erfindungsgemässen Verfahren.

Die Menge an Katalysator, die beim erfindungsgemässen Verfahren eingesetzt wird, ist nicht besonders kritisch. Bevorzugt wird jedoch der Katalysator in einer Konzentration von etwa 0,5 bis etwa 7 Gew.-%, bevorzugt etwa 1-4% bezogen auf das Gewicht der gesamten eingesetzten Silanmischung, verwendet. Da in einer besonders bevorzugten Ausführungsform der Katalysator homogen in der Silanmischung gelöst, zusammen mit der Silanmischung homogen in einen kontinuierlich betriebenen Reaktor eingepumpt wird und nach erfolgter Umsetzung mit der Silanmischung den Reaktor verlassen soll, ist es besonders bevorzugt, den Katalysator in solchen Mengen einzusetzen, die in der Silanmischung zur Lösung gebracht werden können. In dieser besonders bevorzugten Ausführungsform wird daher die Menge an Katalysator etwa 4% nicht überschreiten.

In einer weiteren Ausführungsform des erfindungsgemässen Verfahrens zur Herstellung von Dimethyldichlorsilan aus Zwangsanfallprodukten der Methylchlorsilandirektsynthese kann u.U. auch Methyldichlorsilan dem Reaktionsgemisch zugefügt werden. Methyldichlorsilan dient in dem erfindungsgemässen Verfahren einerseits als ein die Umsetzung fördernder Cokatalysator, kann aber andererseits unter den erfindungsgemässen Bedingungen ebenfalls in das Nutzprodukt Dimethyldichlorsilan umgewandelt werden, da ein interner Austausch von $CH_3$ mit H etwa nach dem Schema

$$2\ CH_3SiHCl_2 \longrightarrow (CH_3)_2SiCl_2 + SiH_2Cl_2$$

stattfinden kann (vgl. R. Calas et al, Journal of Organometallic Chemistry 206 279 (1981)).

Ein weiteres wichtiges Nebenprodukt der Direktsynthese ist Trimethylmonochlorsilan, das in der Siliconchemie Bedeutung hat als endgruppenbildendes und damit den Polymerisationsgrad steuerndes Reagens. Auch dieses Produkt kann falls erforderlich erfindungsgemäss umgewandelt werden.

Die Temperatur, bei der das erfindungsgemässe Verfahren durchgeführt wird, kann variieren, doch führt man die Umsetzung üblicherweise bei einer Temperatur oberhalb 250°C aus. Bevorzugt wird die Umsetzung bei Temperaturen zwischen 300°C und 400°C ausgeführt.

Das erfindungsgemässe Verfahren wird bei erhöhtem Druck durchgeführt. Die Umsetzung wird daher in Druckgefässen wie z.B. Autoklaven oder einer ähnlichen Vorrichtung ausgeführt. In der bevorzugten Ausführungsform wird das erfindungsgemässe Verfahren bei Drucken bis zu 100 bar ausgeführt, besonders bevorzugt ist dabei der Bereich zwischen 30 und 60 bar.

Die Zeitdauer der Reaktion ist nicht besonders kritisch und kann ohne Schwierigkeiten vom Fachmann ermittelt werden.

In den bevorzugten Ausführungsformen werden die methylreichen niedrigsiedenden Anteile und die nichtspaltbaren Disilane mit dem Methyltrichlorsilan in Gegenwart des Katalysators für etwa 0,2 h bis etwa 8 h in Berührung gebracht, um das gewünschte Nutzprodukt zu erhalten. Die Reaktionszeit hängt naturgemäss etwas von der angewandten Temperatur und dem Druck ab. Bei der besonders bevorzugten Ausführungsform beträgt die Umsetzungsdauer zwischen 0,3 und 3 h.

Das erfindungsgemässe Verfahren kann entweder portionsweise, halbkontinuierlich oder kontinuierlich ausgeführt werden. In der bevorzugten Form wird das Verfahren kontinuierlich ausgeführt. In der am meisten bevorzugten Form wird der Katalysator in dem Reaktionsgemisch aufgelöst und homogen mit dem Reaktionsgemisch kontinuierlich in einen auf 250 bis 400°C aufgeheizten Autoklaven eingepumpt. Der Druck ist von der Reaktionstemperatur abhängig und beträgt etwa 30 bis 100 bar, vorzugsweise 30 bis 60 bar. Die Reaktionszeit wird durch die Einpumpgeschwindigkeit so geregelt, dass die Verweilzeit des Reaktionsgemisches im Reaktor zwischen 0,3 und 3 h liegt. Der Ausdruck «Reaktor» beinhaltet dabei auch eine Kaskade aus mehreren Autoklaven. Nach erfolgter Umsetzung wird das Produktgemisch auf Atmosphärendruck entspannt und zur Isolierung des Dimethyldichlorsilans in an sich bekannter Weise aufgearbeitet.

Im folgenden wird die Erfindung anhand von Beispielen näher erläutert. Wenn nichts anderes angegeben, sind alle Teile Gewichtsteile:

Beispiel 1

Beschreibung der Apparatur:

Die Reaktion zur Herstellung von Dimethyldichlorsilan wird durchgeführt in einer Kaskade aus zwei gleich grossen, 5 l Inhalt fassenden Autoklaven, die mit einer möglichst kurzen Rohrleitung miteinander verbunden sind. Das weiter unten zu beschreibende Reaktionsgemisch wird mit Hilfe einer Kolbenmembranpumpe kontinuierlich zugeführt. Die Pumpgeschwindigkeit wird dabei so eingestellt, dass die Gesamtverweilzeit des Reaktionsgemisches in der Kaskade drei Stunden beträgt. Die Temperatur der beiden Autoklaven beträgt 350°C, auch die Rohrverbindung zwischen beiden Autoklaven wird auf diese Temperatur beheizt. Der Reaktionsdruck wird mit Hilfe eines pneumatischen Stellventils (lieferbar z. B. von der Fa. Kämmer GmbH, Essen) auf einen bestimmten konstanten Wert (hier 56 bar) geregelt. Es besteht dabei ein Zusammenhang zwischen eingestelltem Druck und Füllgrad in der Apparatur. Beispielsweise ist bei Regelung des Druckes auf einen Wert von 56 bar die Apparatur zu etwa 25% (gemessen an der kalten Reaktionsmischung) gefüllt. Will man höhere Füllgrade und damit höhere Durchsätze erreichen, so müssen höhere Drücke in Kauf genommen werden. Die Rohrleitung vom zweiten Autoklaven bis zum Ventil wird nicht beheizt, wird aber möglichst kurz gehalten, so dass das Reaktionsgemisch bei der Entspannung noch etwa 180°C heiss ist. Die Entspannung erfolgt in einem Schritt von 56 bar auf Atmosphärendruck. Das Produktgemisch wird aufgefangen und zur Aufarbeitung einer Destillationsapparatur zugeführt.

Beschreibung des Reaktionsgemisches:

Das eingesetzte Reaktionsgemisch enthält folgende Bestandteile:

68,6% Methyltrichlorsilan

14,7% eines hochsiedenden nichtspaltbaren Restes

14,7% einer niedrigsiedenden methylreichen Fraktion

2% Aluminiumchlorid

Der hochsiedende nichtspaltbare Rest besteht unter anderen aus folgenden Disilanen, die in der Lage sind, Methylgruppen abzugeben: 18% Hexamethyldisilan, 18,4% Chlorpentamethyldisilan, 11,7% 1,2-Dichlortetramethyldisilan und 3,5% 1,1,2-Trichlortrimethyldisilan. Die methylreiche niedrigsiedende Fraktion enthält folgende Substanzen, die in der Lage sind, Methylgruppen abzugeben: 61,3% Tetramethylsilan und 11,9% Dimethylmonochlorsilan. Zur Vorbereitung des Reaktionsgemisches wird der Katalysator in dem hochsiedenden nichtspaltbaren Rest durch Einrühren bei 70°C gelöst. Die so erhaltene Lösung wird nach Abkühlen mit den restlichen Bestandteilen der Reaktionsmischung versetzt. Der Druck wird – wie oben angegeben – auf 56 bar eingestellt, die Pumpgeschwindigkeit beträgt 0,8 l/h. Das aufgefangene Rohproduktgemisch enthält 80% unterhalb 80°C siedende Anteile. Die gaschromatographische Zusammensetzung dieser Fraktion ist wie folgt: 58,3% Dimethyldichlorsilan, 5,2% Trimethylmonochlorsilan, 32,8% Methyltrichlorsilan, 2,0% Methyldichlorsilan und 1,7% andere leichtsiedende Komponenten ($SiHCl_3$, Kohlenwasserstoffe). Der nach der Abdestillation der monomeren Silane zurückbleibende höhersiedende chlorreiche Rest (20% des Rohprodukts) wird nach bekannten Verfahren hydrolysiert und dadurch in einen gelblichen inerten Feststoff überführt.

Beispiel 2

Ein Gemisch aus 55 g Methyltrichlorsilan, 45 g eines hochsiedenden methylreichen Restes, 5 g einer leichtsiedenden methylreichen Fraktion und 4 g Natriumaluminiumchlorid wird in einem Autoklaven, der einen Gesamtinhalt von 0,5 l hat, gefüllt, auf 300°C aufgeheizt und 4 h bei dieser Temperatur unter Rühren gehalten. Die Zusammensetzungen der hochsiedenden und niedrigsiedenden methylreichen Fraktionen entspricht denen von Beispiel 1. Man erhält 57,6 g einer unterhalb 80°C siedenden Fraktion, die folgende monomere Silane enthält: 66,4% Dimethyldichlorsilan, 6,4% Trimethylmonochlorsilan, 24,3% Methyltrichlorsilan.

Beispiel 3

Ein Gemisch aus 50 g Methyltrichlorsilan, 40 g eines hochsiedenden nichtspaltbaren Restes, 20 g einer methylreichen leichtsiedenden Fraktion und 2 g Aluminiumchlorid wird in einem 0,5 l-Autoklaven auf 300°C aufgeheizt und für 2 h bei dieser Temperatur belassen. Der hochsiedende Rest enthält folgende methylreiche Substanzen: 10,5% Hexamethyldisilan, 14,5% Chlorpentamethyldisilan, 15,0% 1,2-Dichlortetramethyldisilan und 6,2% 1,1,2-Trichlortrimethyldisilan. Die leichtsiedende Fraktion enthält als methylreiche Komponenten 51,8% Tetramethylsilan und 20,9% Dimethylchlorsilan, 20,8% Trimethylchlorsilan, 54,4% Dimethyldichlorsilan und 3,6% Methyldichlorsilan sowie 2,5% sonstige leichtsiedende Bestandteile.

Beispiel 4

In der in Beispiel 1 beschriebenen, kontinuierlich zu betreibenden Apparatur wird ein wie folgt zusammengesetztes Gemisch zur Reaktion gebracht: 64,1% Methyltrichlorsilan, 8,7% eines hochsiedenden nichtspaltbaren Restes, 8,7% einer leichtsiedenden methylreichen Fraktion, 9,0% Trimethylchlorsilan, 8,7% Methyldichlorsilan und 0,9% Aluminiumchlorid. Die Reaktionstemperatur beträgt 375°C, der Druck 78 bar, die Pumpgeschwindigkeit wird so eingestellt, dass eine Verweilzeit von 2 h resultiert. Der hochsiedende methylreiche Rest enthält folgende Komponenten, die in der Lage sind, Methylgruppen

abzugeben: 14,9% Hexamethyldisilan, 12,6% Chlorpentamethyldisilan, 18,3% 1,2-Dichlortetramethyldisilan und 16,5% 1,1,2-Trimethyltrichlorsilan. Die leichtsiedende Fraktion enthält als methylreiche Komponente 67,3% Tetramethylsilan und 10,8% Dimethylchlorsilan. Das Rohprodukt besteht aus 87,3% einer Fraktion mit einem Siedepunkt unterhalb 80°C, die folgendermassen zusammengesetzt ist: 3% Trimethylchlorsilan, 59,1% Dimethyldichlorsilan, 31,7% Methyltrichlorsilan, 5% Methyldichlorsilan und 1,2% sonstige leichtsiedende Verbindungen.

## Patentansprüche

1. Verfahren zur Herstellung von Dimethyldichlorsilan aus den niedrig- und hochsiedenden Zwangsanfallprodukten der Methylchlorsilan-Direktsynthese, dadurch gekennzeichnet, dass man Methyltrichlorsilan bei Temperaturen zwischen 300°C und 400°C und bei Drucken von 30 bis 100 bar gleichzeitig mit den methylgruppenreichen, niedrig siedenden Anteilen und den hochsiedenden, nicht-spaltbaren Anteilen, in Gegenwart eines Katalysators umsetzt.

2. Verfahren nach Anspruch 1, dadurch gekennzeichnet, dass der Reaktion noch Methyldichlorsilan und/oder Trimethylchlorsilan zugesetzt werden.

3. Verfahren nach Anspruch 1 oder 2, dadurch gekennzeichnet, dass man als Katalysator Aluminiumchlorid einsetzt.

4. Verfahren nach einem der Ansprüche 1 bis 3, dadurch gekennzeichnet, dass das Verfahren kontinuierlich durchgeführt wird.

## Claims

1. A process for the production of dimethyl dichlorosilane from the low-boiling and high-boiling products automatically accumulating in the direct synthesis of methyl chlorosilane, characterized in that methyl trichlorosilane is reacted simultaneously with the low-boiling fractions rich in methyl groups and with the high-boiling, noncleavable fractions in the presence of a catalyst at temperatures of from 300°C to 400°C and under pressure of from 30 to 100 bar.

2. A process as claimed in claim 1, characterized in that methyl dichlorosilane and/or trimethyl chlorosilane are also added to the reaction.

3. A process as claimed in claim 1 or 2, characterized in that aluminium chloride is used as the catalyst.

4. A process as claimed in any of claims 1 to 3, characterized in that it is carried out continuously.

## Revendications

1. Procédé de fabrication de diméthyldichlorosilane au départ de produits secondaires à point d'ébullition bas et à point d'ébullition élevé formés nécessairement lors de la synthèse directe du méthylchlorosilane, caractérisé en ce qu'on fait réagir le méthyltrichlorosilane, à des températures situées entre 300°C et 400°C et des pressions de 30 à 100 bar, simultanément avec les fractions à point d'ébullition bas riches en groupes méthyle et les fractions à point d'ébullition élevé non-décomposables, en présence d'un catalyseur.

2. Procédé selon la revendication 1 caractérisé en ce qu'on ajoute encore le méthyldichlorosilane et/ou le triméthylchlorosilane à la réaction.

3. Procédé selon la revendication 1 ou 2 caractérisé en ce qu'on utilise le chlorure d'aluminium comme catalyseur.

4. Procédé selon l'une des revendications 1 à 3 caractérisé en ce que le procédé est exécuté de manière continue.